# EUROPÄISCHE PATENTANMELDUNG

(11) **EP 3 686 449 A1**
(43) Veröffentlichungstag der Anmeldung: **29.07.2020**
(21) Anmeldenummer: 19153990.7
(22) Anmeldetag: 28.01.2019
(51) Int. Cl.: F16C 29/00, F16C 33/62, F16C 33/30, A47B 88/493, F16C 29/04, A47B 88/45, F16C 33/64

(54) **TELESKOPSCHIENE MIT MINDESTENS DREI SCHIENENELEMENTEN**

(71) Anmelder: Nadella GmbH, 71154 Nufringen (DE)
(72) Erfinder: Schwertner, Thomas, 82515 Wolfratshausen (DE); Schilli, David, 77797 Ohlsbach (DE)
(74) Vertreter: Pistorius, Richard

(57) **Zusammenfassung**

Bei einer Teleskopschiene mit einer ersten und einer zweiten Führungsschiene 110, 130 und mit einer Zwischenschiene 120, wobei die erste Führungsschiene an einer ersten Laufbahn 235, 726, 727 der Zwischenschiene geführt ist und die zweite Führungsschiene an einer zweiten Laufbahn 236, 728, 729 der Zwischenschiene geführt ist, wobei die erste Führungsschiene eine dritte Laufbahn 715, 716 aufweist, wobei die zweite Führungsschiene eine vierte Laufbahn 735, 736 aufweist, und wobei die erste und zweite Führungsschiene jeweils über Wälzkörper 118, 138 an der Zwischenschiene 120 geführt sind, zumindest eine der ersten Führungsschiene, der zweiten Führungsschiene oder der Zwischenschiene weist einen zugeordneten Grundkörper 710, 730, 720 auf, wobei an dem zugeordneten Grundkörper mindestens ein Laufbahnelement 712, 713, 732, 733, 722, 723, 724, 725 zur Ausbildung einer der ersten, zweiten, dritten oder vierten Laufbahn befestigt ist, und wobei der Grundkörper ein erstes Material aufweist und das Laufbahnelement zumindest abschnittsweise ein zweites Material aufweist.

## Beschreibung

Die vorliegende Erfindung betrifft eine Teleskopschiene mit einer ersten und einer zweiten Führungsschiene und mit einer Zwischenschiene, wobei die erste Führungsschiene an einer ersten Laufbahn der Zwischenschiene geführt ist und die zweite Führungsschiene an einer zweiten, zur ersten Laufbahn parallel verlaufenden Laufbahn der Zwischenschiene geführt ist, wobei die erste Führungsschiene eine dritte Laufbahn aufweist, die der ersten Laufbahn der Zwischenschiene zugewandt angeordnet ist, wobei die zweite Führungsschiene eine vierte Laufbahn aufweist, die der zweiten Laufbahn der Zwischenschiene zugewandt angeordnet ist, und wobei die erste und zweite Führungsschiene jeweils über Wälzkörper an der Zwischenschiene geführt sind.

Aus dem Stand der Technik, z.B. aus den Dokumenten CN 105370731 A und EP 1 512 607 A1, ist eine derartige Teleskopschiene mit Führungsschienen, einer Zwischenschiene, sowie mit Wälzkörpern zur Führung der Führungsschienen an der Zwischenschiene bekannt. Dabei ist die Zwischenschiene mit Laufbahnen versehen, an denen die Führungsschienen geführt sind. Des Weiteren sind die Wälzkörper jeweils in Wälzkörperkäfigen angeordnet. Die Laufbahnen sind dabei als separates vergleichsweise dünnes Teil ausgebildet, welches an der Führungsschiene und/oder der Zwischenschiene angeordnet ist. Des Weiteren ist aus der WO 2009114396 A2 eine Linearführung mit Laufbahnen bekannt, die über eine Clipverbindung an der Führungsschiene oder der Zwischenschiene angeordnet sind.

Nachteilig ist bei diesen gebräuchlichen Teleskopschienen oder Linearführungen jedoch, dass die Laufbahnen vergleichsweise dünn ausgebildet sind und somit eine vergleichsweise geringe Last aufnehmen können. Dies kann zu einer Zerstörung der jeweiligen Laufbahn führen und somit bei einem Verfahren der Teleskopschiene von der zusammengefahrenen Position in die ausgefahrene Position, oder umgekehrt, zu einem ungleichmäßigen und unvollständigen Verfahren der Teleskopschiene führen. Darüber hinaus sind die genannten Teleskopschienen oder Linearführungen nicht für eine Biegebelastung ausgelegt.

Es ist deshalb eine Aufgabe der vorliegenden Erfindung, eine Teleskopschiene mit einer ersten und einer zweiten Führungsschiene und mit einer Zwischenschiene, sowie mit Wälzkörpern zur Führung der Führungsschienen an der Zwischenschiene bereitzustellen, bei der durch eine verbesserte Lastaufnahme der Laufbahnen eine stabile und robuste Teleskopschiene realisiert werden kann.

Diese Aufgabe wird gelöst durch eine Teleskopschiene gemäß der vorliegenden Erfindung. Hierbei weist die Teleskopschiene erfindungsgemäß eine erste und eine zweite Führungsschiene sowie eine Zwischenschiene auf. Die erste Führungsschiene ist an einer ersten Laufbahn der Zwischenschiene geführt und die zweite Führungsschiene ist an einer zweiten, zur ersten Laufbahn parallel verlaufenden Laufbahn der Zwischenschiene geführt. Des Weiteren weist die erste Führungsschiene eine dritte Laufbahn auf, die der ersten Laufbahn der Zwischenschiene zugewandt angeordnet ist. Die zweite Führungsschiene weist eine vierte Laufbahn auf, die der zweiten Laufbahn der Zwischenschiene zugewandt angeordnet ist. Die erste und zweite Führungsschiene sind jeweils über Wälzkörper an der Zwischenschiene geführt. Zumindest eine der ersten Führungsschiene, der zweiten Führungsschiene oder der Zwischenschiene weisen einen zugeordneten Grundkörper auf, wobei an dem zugeordneten Grundkörper mindestens ein Laufbahnelement zur Ausbildung einer ersten, zweiten, dritten oder vierten Laufbahn befestigt ist. Der Grundkörper weist ein erstes Material auf und das Laufbahnelement weist zumindest abschnittsweise ein zweites Material auf.

Die Erfindung ermöglicht somit die Bereitstellung einer Teleskopschiene, bei der durch die Ausgestaltung zumindest einer Laufbahn mit einem Grundkörper und einem Laufbahnelement, die unterschiedliche Materialen aufweisen, einfach und unkompliziert eine verbesserte Lastaufnahme erreicht werden kann. Somit kann eine stabile und robuste Laufbahn ermöglicht werden. Vorzugsweise ist das Laufbahnelement über eine Nut-Feder-Verbindung am Grundkörper befestigt. Somit kann auf einfache Art und Weise eine sichere und zuverlässige Verbindung zwischen dem Laufbahnelement und dem Grundkörper ermöglicht werden.

Das erste Material ist bevorzugt Aluminium und das zweite Material Stahl. Somit kann ein leichter Grundkörper mit einem robusten Laufbahnelement ermöglicht werden.

Gemäß einer Ausführungsform weist das Laufbahnelement Vollmaterial auf und ist durch Kaltziehen und/oder Fräsen ausgebildet. Somit kann ein stabiles Laufbahnelement ermöglicht werden.

Bevorzugt ist die erste, zweite, dritte und/oder vierte Laufbahn derart ausgebildet, dass zwischen dem Wälzkörper und der Laufbahn zumindest ein 2-Punkt-Kontakt, bevorzugt ein 3-Punkt-Kontakt besteht. Somit kann eine vergleichsweise große Lastaufnahme ermöglicht werden.

Eine Dicke des Laufbahnelements ist vorzugsweise größer als eine maximale Eindringtiefe einer Hertzschen Pressung. Somit kann eine Zerstörung des Laufbahnelements, und somit der Laufbahn, aufgrund von hohen Lasten verhindert werden, wodurch ein zuverlässiger Betrieb der Teleskopschiene ermöglicht wird.

Die erste Führungsschiene ist bevorzugt über eine erste Mehrzahl von Wälzkörpern an der Zwischenschiene geführt und die zweite Führungsschiene ist über eine zweite Mehrzahl von Wälzkörpern an der Zwischenschiene geführt. Somit kann auf einfache Art und Weise eine Führung der ersten und zweiten Führungsschiene ermöglicht werden.

Vorzugsweise sind die erste und zweite Mehrzahl von Wälzkörpern jeweils in einem Wälzkörperkäfig angeordnet. Somit kann eine einfache und unkomplizierte Anordnung der Wälzkörper ermöglicht werden

Die erste und/oder zweite Führungsschiene sind vorzugsweise an der Zwischenschiene zwangsgeführt, wobei die erste und zweite Führungsschiene sowie die Zwischenschiene über mindestens zwei längliche Verbindungselemente bei einem Bewegen von einer zusammengefahrenen Position in eine ausgefahrene Position, oder umgekehrt, synchronisiert sind, wobei die Zwischenschiene an jedem ihrer Enden zumindest eine Rolle zum Umlenken des jeweiligen Verbindungselements aufweist. Somit kann auf einfache Art und Weise eine Zwangsführung der ersten und/oder zweiten Führungsschiene ermöglicht werden.

Bevorzugt sind die Verbindungselemente an der jeweiligen Führungsschiene jeweils über zugeordnete Befestigungselemente fixiert, wobei die zugeordneten Befestigungselemente als Verfahrwegsbegrenzung der ersten und zweiten Führungsschiene an der Zwischenschiene in der ausgefahrenen Position ausgebildet sind. Somit kann eine kompakte Teleskopschiene bereitgestellt werden, bei der auf separate Verfahrwegsbegrenzungs-Elemente verzichtet werden kann.

Gemäß einer Ausführungsform ist den Verbindungselementen jeweils eine Spannvorrichtung zum manuellen Spannen des jeweiligen Verbindungselements zugeordnet. Somit kann einfach und unkompliziert eine geeignete Spannung der Verbindungselemente eingestellt werden.

Bevorzugt sind die Verbindungselemente nach Art eines Seils, eines Riemens und/oder einer Kette ausgebildet und sind dazu ausgebildet, Druckkräfte und/ oder Zugkräfte aufzunehmen. Somit kann ein kostengünstiges und stabiles Verbindungselement bereitgestellt werden.

Vorzugsweise weist die Zwischenschiene an jedem ihrer Enden zumindest eine Rolle zum Umlenken des jeweiligen Verbindungselements auf. Somit kann auf einfache Art und Weise eine Führungsschiene mit der Zwischenschiene verbunden werden, wodurch die Zwangsführung der entsprechenden Führungsschiene an der Zwischenschiene ermöglicht werden kann.

Die erste und zweite Führungsschiene sowie die Zwischenschiene weisen vorzugsweise jeweils eine Länge auf, die einer ersten Länge der Teleskopschiene in der zusammengefahrenen Position entspricht, wobei die Teleskopschiene in der ausgefahrenen Position eine zweite Länge aufweist, die zumindest annähernd der doppelten ersten Länge entspricht, und wobei ein relativer Verfahrweg zwischen der ersten Führungsschiene und der Zwischenschiene sowie der zweiten Führungsschiene und der Zwischenschiene zum Bewegen der Teleskopschiene von der zusammengefahrenen Position in die ausgefahrene Position, oder umgekehrt, jeweils zumindest annähernd der Hälfte der ersten Länge entspricht. Somit kann eine Hubverkürzung ermöglicht werden, wodurch eine kompakte Teleskopschiene bereitgestellt werden kann

Gemäß einer Ausführungsform ist die Zwischenschiene über eine direkte Anbindung mit einer translatorischen Bewegungseinheit verbindbar. Somit kann auf einfache Art und Weise eine Anbindung an einen Antrieb zum Verfahren der Teleskopschiene in die zusammengefahrene und/oder ausgefahrene Position ermöglicht werden.

Die Erfindung ist anhand von in den Zeichnungen dargestellten Ausführungsbeispielen in der nachfolgenden Beschreibung näher erläutert. Es zeigen:
- Fig. 1: eine perspektivische Seitenansicht einer erfindungsgemäßen Teleskopschiene,
- Fig. 2: einen vergrößerten Ausschnitt der Teleskopschiene von Fig. 1,
- Fig. 3: eine Seitenansicht des Ausschnitts von Fig. 2 zur Verdeutlichung eines Befestigungselements,
- Fig. 4: eine perspektivische Ansicht des Ausschnitts von Fig. 3,
- Fig. 5: eine Seitenansicht eines Ausschnitts der Teleskopschiene von Fig. 1 mit einem weiteren Befestigungselement,
- Fig. 6: eine schematische Draufsicht auf die Teleskopschiene von Fig. 1 mit den Befestigungselementen von Fig. 3 und Fig. 5 in einer zusammengefahrenen Position,
- Fig. 7: eine schematische Draufsicht auf die Teleskopschiene von Fig. 6 in einer ausgefahrenen Position,
- Fig. 8: eine schematische Draufsicht auf eine weitere Teleskopschiene mit den Befestigungselementen von Fig. 3 und Fig. 5 in einer zusammengefahrenen Position,
- Fig. 9: eine schematische Draufsicht auf die Teleskopschiene von Fig. 8 in einer ausgefahrenen Position,
- Fig. 10: eine schematische Ansicht der Teleskopschiene von Fig. 9,
- Fig. 11: eine perspektivische Ansicht der Teleskopschiene von Fig. 1 in der zusammengefahrenen und der ausgefahrenen Position,
- Fig. 12: eine Schnittansicht der Teleskopschiene von Fig. 1 bis Fig. 11 mit Führungsschienen gemäß einer Ausführungsform,
- Fig. 13: eine Schnittansicht der Teleskopschiene von Fig. 12 mit Führungsschienen gemäß einer weiteren Ausführungsform,
- Fig. 14: eine Schnittansicht der Teleskopschiene von Fig. 1 bis Fig. 11 mit einer weiteren Anordnung der Führungsschienen,
- Fig. 15: eine Schnittansicht einer weiteren Ausbildung der Teleskopschiene von Fig. 1 bis Fig. 11,
- Fig. 16: eine Schnittansicht einer weiteren Zwischenschiene mit den zugeordneten Laufbahnen,
- Fig. 17: eine perspektivische Draufsicht auf eine dem Grundkörper von Fig. 16 zugeordnete Laufbahn, und
- Fig. 18: eine perspektivische Draufsicht auf einen Wälzkörperkäfig.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

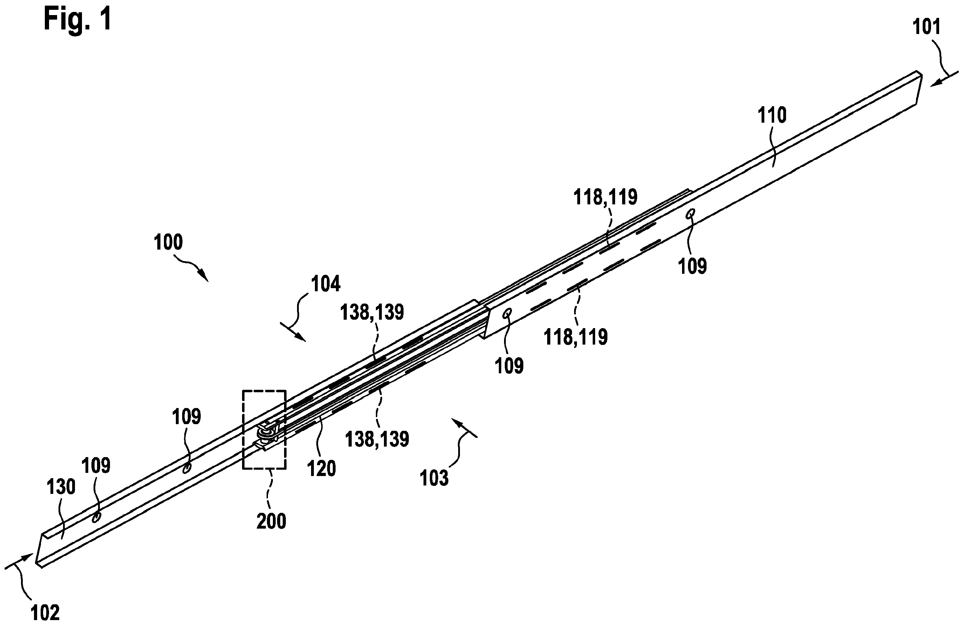

Fig. 1 zeigt eine erfindungsgemäße Teleskopschiene 100 mit einem ersten axialen Ende 101 und einem zweiten axialen Ende 102, sowie einer illustrativ vorderen Seite 103 und einer illustrativ hinteren Seite 104. Die Teleskopschiene 100 weist vorzugsweise mindestens eine Führungsschiene 110, 130 sowie mindestens eine Zwischenschiene 120 auf. Illustrativ und bevorzugt weist die Teleskopschiene 100 zumindest eine erste und zweite Führungsschiene 110, 130 sowie mindestens eine Zwischenschiene 120 auf.

In Fig. 1 ist eine illustrativ rechts angeordnete erste Führungsschiene 110 sowie eine illustrativ links angeordnete zweite Führungsschiene 130 gezeigt. Dabei ist die erste Führungsschiene 110 der vorderen Seite 103 zugewandt angeordnet, und die zweite Führungsschiene 130 ist der hinteren Seite 104 zugewandt angeordnet. Erfindungsgemäß sind die erste und zweite Führungsschiene 110, 130 an der Zwischenschiene 120 zwangsgeführt.

Es wird darauf hingewiesen, dass in Fig. 1 zur Vereinfachung der Zeichnung lediglich eine einzelne Zwischenschiene 120 gezeigt ist, sodass nachfolgend zwecks Einfachheit und Klarheit nur auf "die Zwischenschiene 120" Bezug genommen wird. Allerdings können auch zwei oder mehr Zwischenschienen Anwendung finden, wobei diese dann zumindest teilweise aneinander zwangsgeführt werden.

Bevorzugt weisen die erste und zweite Führungsschiene 110, 130 sowie die Zwischenschiene 120 ein offenes Profil auf. Die erste und zweite Führungsschiene 110, 130 weisen dabei vorzugsweise ein C-förmiges, U-förmiges, doppel-T-förmiges oder ein flaches Profil auf.

Die Zwischenschiene 120 weist bevorzugt ein U-förmiges, S-förmiges oder doppel-T-förmiges Profil auf. Dabei kann die Zwischenschiene 120 einstückig oder mehrstückig, z.B. zweistückig, ausgebildet sein. Bei einer beispielhaften zweistückigen Ausführungsform der Zwischenschiene 120 weist diese vorzugsweise zwei U-Profile oder zwei C-förmige Profile auf, die über eine beliebige Verbindung, z.B. eine Schweißverbindung, miteinander verbunden sind.

Die erste und zweite Führungsschiene 110, 130 weisen vorzugsweise jeweils zumindest ein Befestigungselement 109 auf. Das Befestigungselement 109 ist bevorzugt nach Art einer Ausnehmung, einer Schraube und/oder eines Stifts ausgebildet. Das Befestigungselement 109 ist dabei vorzugsweise dazu ausgebildet, eine Befestigung der Teleskopschiene 100 über eine Führungsschiene 110, 130 an einem Gegenstand zu ermöglichen und/oder eine Verbindung der Teleskopschiene 100 mit einem zu bewegenden Gegenstand zu ermöglichen.

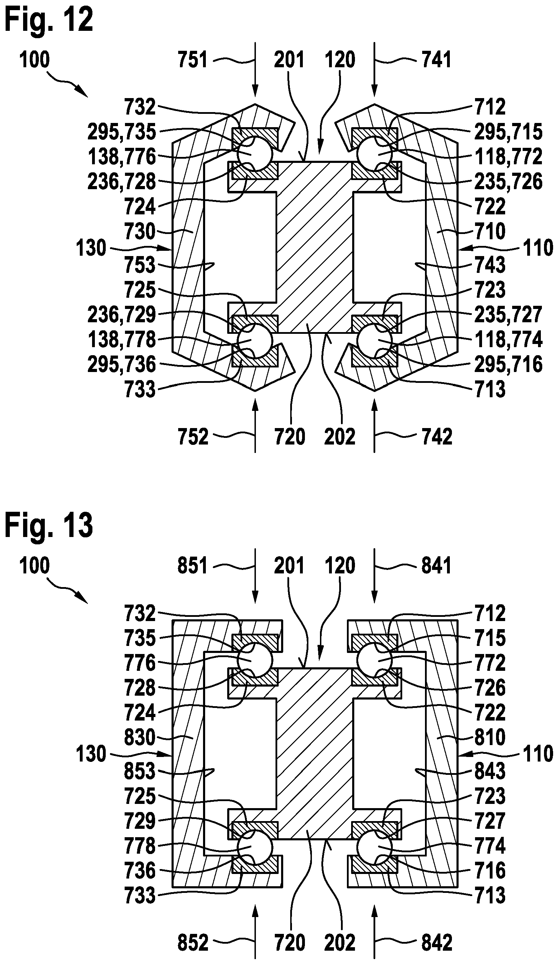

Vorzugsweise ist zumindest eine Führungsschiene 110, 130 über Wälzkörper 118, 138 an der Zwischenschiene 120 geführt. Illustrativ und vorzugsweise sind die erste und zweite Führungsschiene 110, 130 über eine Mehrzahl 119, 139 von Wälzkörpern 118, 138 an der Zwischenschiene 120 geführt. Hierbei ist vorzugsweise die erste Führungsschiene 110 über eine erste Mehrzahl 119 von Wälzkörpern 118 an der Zwischenschiene 120 geführt und die zweite Führungsschiene 130 ist über eine zweite Mehrzahl 139 von Wälzkörpern 138 an der Zwischenschiene 120 geführt. Dabei sind die Wälzkörper 118, 138 vorzugsweise in einem Wälzkörperschlitten (700 in Fig. 12) angeordnet.

Hierbei kann ein Wälzkörperschlitten (700 in Fig. 12) an einer illustrativ oberen und/oder unteren Wälzfläche der jeweiligen Führungsschiene 110, 130 angeordnet sein. Jedoch kann der Wälzkörperschlitten (700 in Fig. 12) auch derart ausgebildet sein, dass er illustrativ obere und untere Wälzkörper 118, 138 miteinander verbindet.

Gemäß einer Ausführungsform sind die Wälzkörper 118, 138 nach Art von Kugeln, Kegeln, Nadeln usw. ausgebildet. Durch die Wälzkörper 118, 138 ist eine mehrachsige Lastaufnahme möglich. Dabei wird eine formschlüssige Synchronisierung realisiert, die keine Rutschkupplung erfordert. Die Synchronisierung ist dabei zumindest abschnittsweise in der Teleskopschiene 100 angeordnet, bevorzugt komplett in der Teleskopschiene 100 platziert.

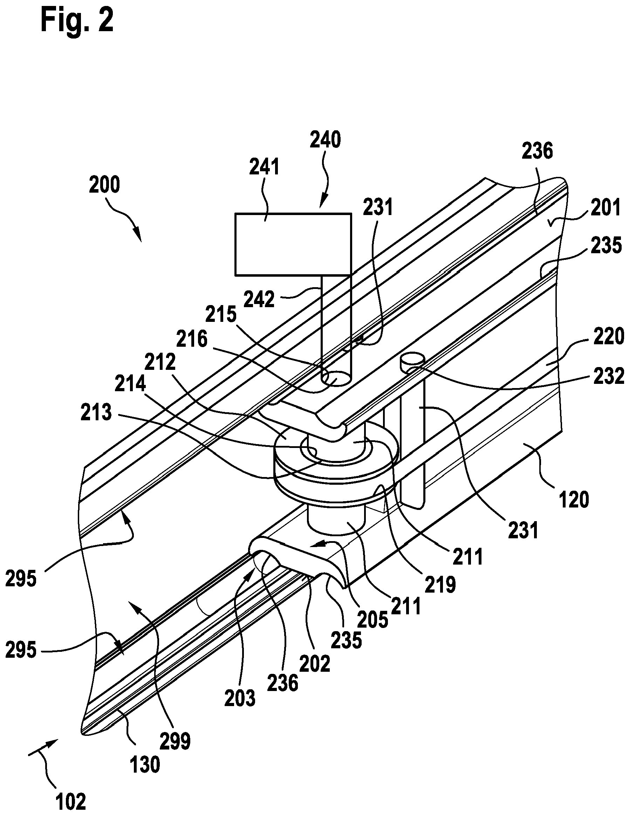

Der Wälzkörperschlitten (700 in Fig. 12) bewegt sich bei einem Verfahren der Teleskopschiene 100 mit der jeweiligen Führungsschiene 110, 130 mit. Des Weiteren zeigt Fig. 1 einen Ausschnitt 200, der nachfolgend in Fig. 2 beschrieben wird.

Fig. 2 zeigt den Ausschnitt 200 von Fig. 1 mit der Zwischenschiene 120 und der zweiten Führungsschiene 130. Die Zwischenschiene 120 weist exemplarisch und vorzugsweise eine Doppel-T-Träger-Form auf und ist illustrativ an einer Innenseite 299 der zweiten Führungsschiene 130, bzw. der Teleskopschiene 100 von Fig. 1, angeordnet.

Illustrativ weist die Zwischenschiene 120 eine obere Seite 201 und eine untere Seite 202 auf, wobei zumindest an der oberen Seite 201 und/oder unteren Seite 202 eine erste Laufbahn 235 und eine zweite Laufbahn 236 zum Zwangsführen der ersten und zweiten Führungsschiene 110, 130 vorgesehen ist. Beispielhaft weist die Zwischenschiene 120 in Fig. 2 eine erste Laufbahn 235 auf der oberen Seite 201 und der unteren Seite 202 auf, wobei die erste Laufbahn 235 exemplarisch im Bereich des linken Endes der oberen und unteren Seite 201, 202 angeordnet ist und zum Führen der ersten Führungsschiene 110 ausgebildet ist. Die zweite Laufbahn 236 ist vorzugsweise parallel zur ersten Laufbahn 235 angeordnet, wobei die zweite Laufbahn 236 illustrativ an einem linken Ende der Zwischenschiene 120 angeordnet ist und zum Führen der zweiten Führungsschiene 130 ausgebildet ist.

Illustrativ weisen die Laufbahnen 235, 236 jeweils eine halbrunde Form auf, sie können jedoch auch eine V-förmige und/oder trapezförmige Form aufweisen. Des Weiteren weist die, repräsentativ für die erste und zweite Führungsschiene 110, 130 eingezeichnete, zweite Führungsschiene 130 an ihrer jeweils der Zwischenschiene 130 bzw. der zweiten Laufbahn 236 zugewandten Seite eine Laufbahn 295 auf. Die erste und/oder zweite Laufbahn 235, 236 sind dabei zur Anordnung der Wälzkörper 118, 138 von Fig. 1 ausgebildet. Dabei wird zumindest ein 2-Punkt-Kontakt der Wälzkörper 118, 138 mit der Laufbahn 235, 236, 295 ausgebildet. Vorzugsweise wird ein 3-Punkt-Kontakt oder ein 4-Punkt-Kontakt der Wälzkörper 118, 138 mit der Laufbahn 235, 236, 295 ausgebildet.

Bevorzugt weisen die Laufbahnen 235, 236 einen Herausfallschutz auf. Dieser ist vorzugsweise nach Art eines Stiftes 231 ausgebildet, der bevorzugt in einer Ausnehmung 232, die in der Laufbahn 235, 236 ausgebildet ist, angeordnet ist. Dabei kann der Stift 231 einer illustrativ oberen und/oder unteren Laufbahn 235, 236 zugeordnet sein.

Illustrativ ist der Stift 231 als Herausfallschutz der oberen und unteren Laufbahn 235, 236 ausgebildet. Jedoch kann der Stift 231 auch entweder nur der oberen oder nur der unteren Laufbahn 235, 236 zugeordnet sein, wobei der Stift 231 nicht durchgängig ausgebildet ist.

Des Weiteren kann auch lediglich ein Stift 231 als Herausfallschutz einer Führungsschiene 110, 130 vorgesehen sein. Dabei kann z.B. ein Stift 231 der oberen, linken Laufbahn 235 und ein Stift 231 der unteren, rechten Laufbahn 236 zugeordnet sein. Es wird jedoch darauf hingewiesen, dass dabei die Stifte 231 auch jeweils nur auf der oberen oder unteren Laufbahn 235, 236 angeordnet sein können.

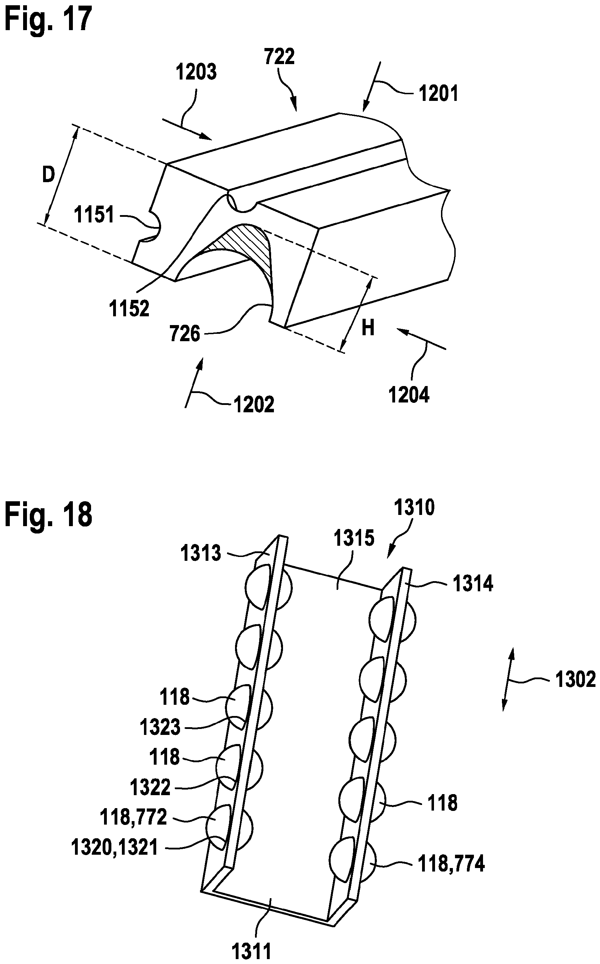

Bevorzugt weisen die Führungsschienen 110, 130 und/oder ein Wälzkörperkäfig (1310 in Fig. 18) eine Gegenkontur zum Herausfallschutz bzw. zum Stift 231 auf. Die Gegenkontur kann dabei als Schraube, Stift, Platte und/oder als eingedrückte Stelle ausgebildet sein.

Die erste und zweite Führungsschiene 110, 130 sowie die Zwischenschiene 120 sind bevorzugt über mindestens zwei längliche Verbindungselemente 220 bei einem Bewegen von einer zusammengefahrenen Position in eine ausgefahrene Position, oder umgekehrt, synchronisiert. Die mindestens zwei länglichen Verbindungselemente 220 sind vorzugsweise nach Art eines Seils, eines Riemens und/oder einer Kette ausgebildet.

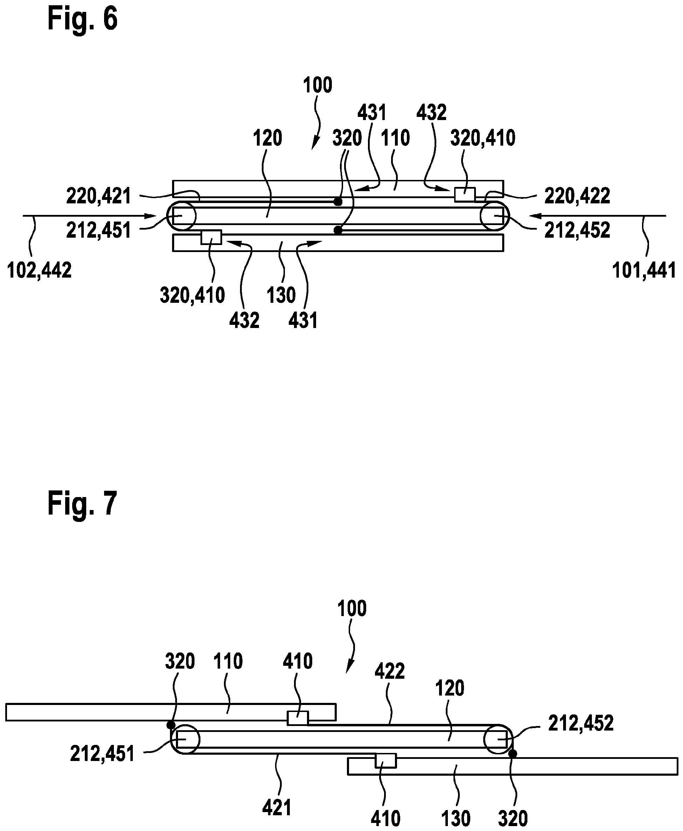

Darüber hinaus sind die mindestens zwei länglichen Verbindungselemente 220 bevorzugt dazu ausgebildet, Druckkräfte und/oder Zugkräfte aufzunehmen. Vorzugsweise weist die Zwischenschiene 120 an jedem ihrer Enden (441, 442 in Fig. 6) zumindest eine Rolle 212 zum Umlenken von mindestens einem Verbindungselement 220 auf, sodass die Zwischenschiene 120 vorzugsweise zumindest zwei Rollen 212 aufweist.

Die zumindest zwei Rollen 212 sind bevorzugt dazu ausgebildet, ein Drehmoment zu übertragen. Dabei sind die Rollen 212 vorzugsweise antreibbar, bevorzugt elektrisch, mechanisch, pneumatisch und/oder hydraulisch.

Illustrativ weist die Zwischenschiene 120 an ihren axialen Enden, von denen in Fig. 2 illustrativ nur ein einzelnes axiales Ende gezeigt und mit dem Bezugszeichen 203 gekennzeichnet ist, jeweils eine Ausnehmung 205 zur Anordnung der Rolle 212 auf. Die Rolle 212 ist dabei vorzugsweise über zumindest ein Lagerelement 213, das illustrativ in einer Aufnahme 214 der Rolle 212 angeordnet ist, auf einem Rotationsübertragungselement 211 angeordnet.

Bevorzugt ist das Rotationsübertragungselement 211 als Welle oder Achse ausgebildet. Dabei kann eine Welle ein Moment aufnehmen und eine Achse nicht. Das Rotationsübertragungselement 211 kann jedoch auch außermittig an der Zwischenschiene 120 angeordnet sein.

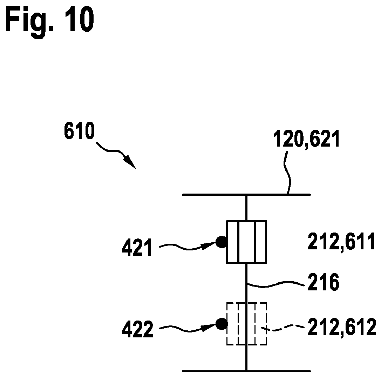

Die Rolle 212 ist bevorzugt fest an der Zwischenschiene 120 angeordnet. Insbesondere ist die Rolle 212 vorzugsweise horizontal an der Zwischenschiene 120 angeordnet. Illustrativ und vorzugsweise ist die Rolle 212 mittig zwischen der oberen Seite 201 und der unteren Seite 202 der Zwischenschiene 120 angeordnet. Jedoch kann die Rolle 212 auch außermittig angeordnet sein, wie beispielhaft bei Fig. 10 beschrieben. Darüber hinaus weist die Rolle 212 bevorzugt eine Aufnahme 219 zum Führen von zumindest einem Verbindungselement 220 auf.

Des Weiteren ist die Rolle 212 vorzugsweise über eine Drehachse 216 mit einer Antriebseinheit 240, z.B. einem Elektromotor 241, verbunden. Dabei ist die Antriebseinheit 240 als translatorische Bewegungseinheit ausgebildet, die nach dem Prinzip des umgekehrten Flaschenzugs arbeitet, d. h. mit doppelter Kraft und dem halben Verfahrweg wird die Teleskopschiene 100 von Fig. 1 komplett ausgefahren bzw. von der zusammengefahrenen Position in die ausgefahrene Position bewegt. Somit kann im Vergleich zum Stand der Technik vorteilhafterweise eine Bauraumreduzierung ermöglicht werden.

Die Drehachse 216 ist dabei bevorzugt in einer Ausnehmung 215 der Zwischenschiene 120 angeordnet bzw. gelagert. Die Ausnehmung 215 ist vorzugsweise an der oberen und unteren Seite 201, 202 der Zwischenschiene 120 ausgebildet.

Darüber hinaus ist die Drehachse 216 vorzugsweise mit einem Antriebselement 242 der Antriebseinheit 240 verbunden. Bevorzugt ist das Rotationsübertragungselement 211 mit der Drehachse 216 drehverbunden. Darüber hinaus ist die Rolle 212 vorzugsweise mittelbar mit der Zwischenschiene 120 verbunden. Dabei wird ein Formschluss ausgebildet.

Es wird jedoch darauf hingewiesen, dass das Lagerelement 213 auch in der Aufnahme 215 angeordnet sein kann. Dabei ist die Rolle 212 direkt mit der Drehachse 216 verbunden.

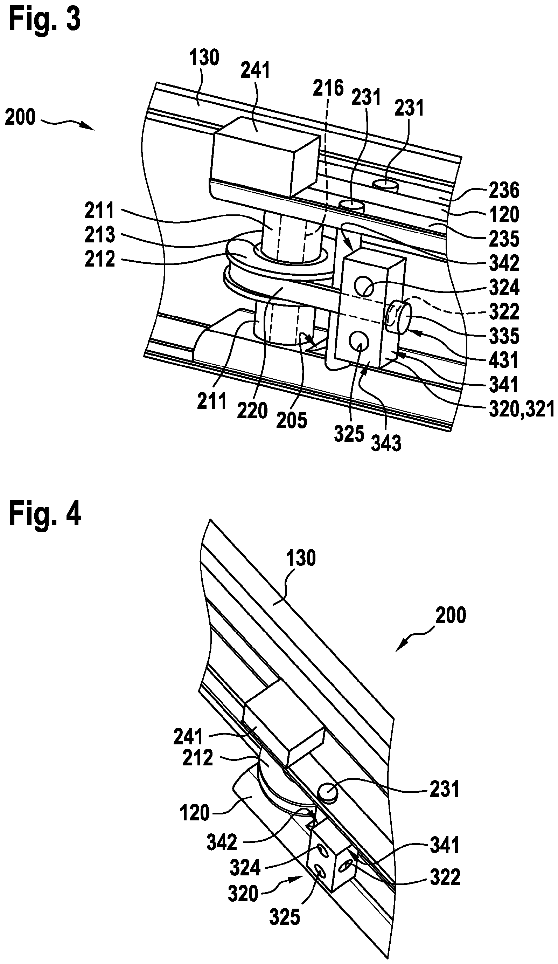

Fig. 3 zeigt den Ausschnitt 200 von Fig. 1 und Fig. 2, zwecks Einfachheit und Übersichtlichkeit jedoch ohne die erste Führungsschiene 110. Dabei verdeutlicht Fig. 3 Mittel zur Befestigung des Verbindungselements 220, bzw. eines Endes 431 des Verbindungselements 220, an der hier nicht dargestellten ersten Führungsschiene 110.

Bevorzugt ist ein Ende 431 des Verbindungselements 220 über zumindest ein zugeordnetes Befestigungselement 320 an der jeweils zugeordneten Führungsschiene 110, 130 befestigt. Das zumindest eine zugeordnete Befestigungselement 320 weist vorzugsweise einen rechteckigen Grundkörper 321 auf.

Bevorzugt ist das zumindest eine zugeordnete Befestigungselement 320 an einer der Zwischenschiene 120 zugewandten Längsseite 299 (s. Fig. 2) der ersten und/oder zweiten Führungsschiene 110, 130 angeordnet. Dabei liegt eine dem zumindest einen Befestigungselement 320 zugeordnete Anlagefläche 343 an der jeweiligen Längsseite 299 der jeweiligen Führungsschiene 110, 130 an.

Vorzugsweise ist das zumindest eine zugeordnete Befestigungselement 320 an der ersten und/oder zweiten Führungsschiene 110, 130 angeschraubt. Hierfür weist das zumindest eine Befestigungselement 320 mindestens eine, bevorzugt zwei Ausnehmungen 324, 325 zur Anordnung eines Schraubelements auf. Bevorzugt sind die Ausnehmungen 324, 325 als Sacklochbohrungen ausgebildet.

Es wird jedoch darauf hingewiesen, dass das zumindest eine Befestigungselement 320 auch auf eine beliebig andere Art und Weise an der jeweiligen Führungsschiene 110, 130 angeordnet werden kann. So kann das zumindest eine Befestigungselement 320 beispielhaft auch durch eine Klebeverbindung an der jeweiligen Führungsschiene 110, 130 angeordnet sein. Darüber hinaus kann das zumindest eine Befestigungselement 320 auch einstückig mit der jeweiligen Führungsschiene ausgebildet sein.

Illustrativ weist das Befestigungselement 320 ein erstes und zweites axiales Ende 341, 342 auf. Dabei ist das erste axiale Ende 341 dem ersten Ende 101 (s. Fig. 1) der Teleskopschiene 100 von Fig. 1 zugewandt angeordnet, und das zweite axiale Ende 342 ist dem zweiten Ende 102 (s. Fig. 1) der Teleskopschiene 100 zugewandt angeordnet. Bevorzugt weist das Befestigungselement 320 in axialer Richtung eine vorzugsweise als Durchgangsbohrung ausgebildete Ausnehmung 322 auf. Die Ausnehmung 322 ist vorzugsweise zur abschnittsweisen Aufnahme des Verbindungselements 220 ausgebildet, insbesondere zur abschnittsweisen Aufnahme eines Endes 431 des Verbindungselements 220.

In der in Fig. 3 gezeigten, ausgefahrenen Position der Teleskopschiene 100 liegt illustrativ das zweite axiale Ende 342 des Befestigungselements 320 abschnittsweise an dem Stift 231 an, der in der ersten Laufbahn 235 angeordnet ist. Darüber hinaus liegt bevorzugt ein Blockierelement 335 des Verbindungselements 220 am ersten Ende 341 des Befestigungselements 320 an.

Das Blockierelement 335 weist vorzugsweise einen größeren Grundkörper auf, als die Ausnehmung 322 des Befestigungselements 320. Dabei ist das Blockierelement 335 bevorzugt dazu ausgebildet, das Verbindungselement 220 am Befestigungselement 320 zu fixieren. Vorzugsweise ist das Blockierelement 335 an dem Ende 431 des Verbindungselements 220 angeordnet, insbesondere aufgepresst.

Illustrativ ist die Ausnehmung 322 in horizontaler Richtung des Befestigungselements 320 zwischen den Ausnehmungen 324, 325 angeordnet. Es wird jedoch darauf hingewiesen, dass die Ausnehmung 322 auch außermittig angeordnet werden kann. Insbesondere ist die Ausnehmung 322 analog zur Position der Rolle 212 angeordnet.

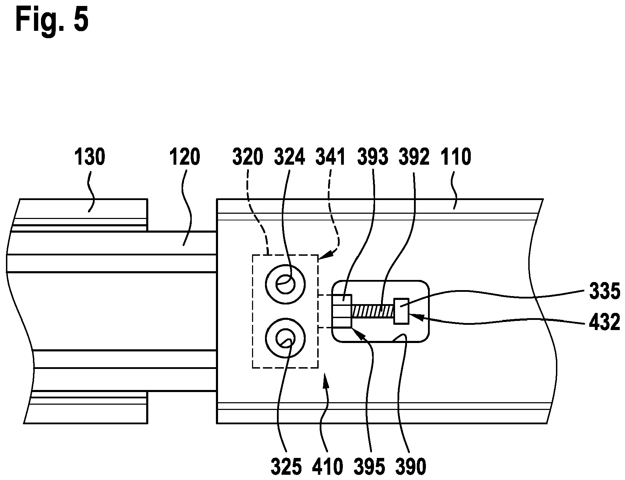

Es wird darauf hingewiesen, dass auch lediglich ein Befestigungselement 320 (und 410 in Fig. 5) an einer Führungsschiene 110, 130 angeordnet sein kann. Dabei kann das Befestigungselement 320 (und 410 in Fig. 5) derart ausgebildet sein, dass eine feste Anordnung des Verbindungselements 220 sowie einer Spannvorrichtung (395 in Fig. 5) ermöglicht werden kann.

Fig. 4 zeigt den Ausschnitt 200 von Fig. 3, zwecks Einfachheit und Übersichtlichkeit jedoch ohne das Verbindungselement 220. Dabei verdeutlicht Fig. 4 die Anordnung des Befestigungselements 320 an dem Stift 231 in der ausgefahrenen Position der Teleskopschiene 100 von Fig. 1. Hierbei zeigt Fig. 4 die Anordnung der Ausnehmung 322, die bevorzugt mittig zur Ausnehmung 324, 325 angeordnet ist.

Fig. 5 zeigt das zweite axiale Ende der Führungsschiene 110 von Fig. 1, wobei dem Befestigungselement 320 von Fig. 3 bevorzugt eine Spannvorrichtung 395 zugeordnet ist. Die Spannvorrichtung 395 ist zum manuellen Spannen des ersten und/oder zweiten Verbindungselements 220 von Fig. 3 ausgebildet. Das Befestigungselement 320 und die Spannvorrichtung 395 bilden dabei vorzugsweise eine Befestigungseinheit 410 aus.

Bevorzugt weist die Führungsschiene 110 im Bereich der Spannvorrichtung 395 eine Ausnehmung 390 zum Bedienen der Spannvorrichtung 395 auf. Analog zum ersten Ende 431 von Fig. 3 des Verbindungselements 220 weist ein zweites Ende 432 exemplarisch das Blockierelement 335 auf.

Der Spannvorrichtung 395 ist vorzugsweise eine Gewindehülse 392 zugeordnet, die bevorzugt auf einem Außenumfang des Verbindungselements 220 angeordnet ist. Zum Spannen der Spannvorrichtung 395 bzw. des Verbindungselements 220 ist vorzugsweise eine Spannmutter 393 vorgesehen, die bevorzugt auf dem Gewinde der Gewindehülse 392 angeordnet ist. Die Spannmutter 393 liegt dabei illustrativ an der Seite 341 des Befestigungselements 320 an. Fig. 6 zeigt die Teleskopschiene 100 von Fig. 1 mit der ersten und zweiten Führungsschiene 110, 130 sowie der Zwischenschiene 120 in der zusammengefahrenen Position. Dabei verdeutlicht Fig. 6 die Anordnung des Befestigungselements 320 bzw. der Befestigungseinheit 410 von Fig. 5.

Illustrativ und vorzugsweise ist an der ersten Führungsschiene 110 ein erstes Ende 431 eines ersten Verbindungselements 421 sowie ein zweites Ende 432 eines zweiten Verbindungselements 422 jeweils über zugeordnete Befestigungselemente 320, 410 fixiert. Darüber hinaus ist an der zweiten Führungsschiene 130 bevorzugt ein zweites Ende 432 des ersten Verbindungselements 421 sowie ein erstes Ende 431 des zweiten Verbindungselements 422 über zugeordnete Befestigungselemente 320, 410 fixiert. Hierbei sind die zugeordneten Befestigungselemente 320, 410 vorzugsweise als Verfahrwegsbegrenzung der ersten und zweiten Führungsschiene 110, 130 an der Zwischenschiene 120 in der ausgefahrenen Position ausgebildet.

Bevorzugt sind die Befestigungselemente 320 mittig auf der ersten und zweiten Führungsschiene 110, 130 angeordnet. Darüber hinaus sind die Befestigungseinheiten 410 vorzugsweise jeweils an einem axialen Ende der ersten und zweiten Führungsschiene 110, 130 angeordnet.

Das Verbindungselement 421 ist illustrativ und vorzugsweise über das Befestigungselement 320 mittig an der ersten Führungsschiene 110 angeordnet und verläuft über eine Rolle 451 zur zweiten Führungsschiene 130. An der zweiten Führungsschiene 130 ist das Verbindungselement 421 über eine Befestigungseinheit 410 angeordnet.

Die Befestigungseinheit 410 ist dabei bevorzugt an der zweiten Führungsschiene 130 und dem zweiten Ende 102 der Teleskopschiene 100 zugewandt angeordnet. Des Weiteren ist vorzugsweise das zweite Verbindungselement 422 mit seinem zweiten Ende 432 an einem dem ersten Ende 101 der Teleskopschiene 100 zugewandten Ende der ersten Führungsschiene 110 befestigt.

Das Verbindungselement 422 wird vorzugsweise über eine Rolle 452 zur zweiten Führungsschiene 130 umgelenkt und ist dort bevorzugt über ein Befestigungselement 320 illustrativ mittig befestigt. Dabei ist das Verbindungselement 422 an seinem ersten axialen Ende 431 exemplarisch mittig an der zweiten Führungsschiene 130 angeordnet.

Illustrativ ist das zweite Ende 432 des Verbindungselements 421 an einem dem zweiten Ende 102 der Teleskopschiene 100 zugewandten zweiten Ende der Führungsschiene 442 angeordnet. Darüber hinaus ist das zweite Ende 432 des Verbindungselements 422 bevorzugt an einem dem ersten axialen Ende 101 der Teleskopschiene 100 zugewandten Ende 441 der ersten Führungsschiene 110 angeordnet.

Es wird jedoch darauf hingewiesen, dass die Befestigungseinheiten 410 der Verbindungselemente 421, 422 auch an einem gegenüberliegenden Ende der jeweiligen Führungsschiene 110, 130 angeordnet sein können. Des Weiteren können die Befestigungseinheiten 410 auch mittig an der jeweiligen Führungsschiene 110, 130 angeordnet sein, wobei die ersten Enden 431 der jeweiligen Verbindungselemente 421, 422 an einem axialen Ende der jeweils gegenüberliegenden Führungsschiene 110, 130 angeordnet sind.

Illustrativ sind in Fig. 6 zwei Verbindungselemente 220 bzw. 421, 422 gezeigt. Es wird jedoch darauf hingewiesen, dass die Teleskopschiene 100 auch mehr als zwei Verbindungselemente 220 aufweisen kann. So können die erste und zweite Führungsschiene 110, 130 z.B. auch jeweils über zwei Verbindungselemente 421, 422 verbunden sein.

Fig. 7 zeigt die Teleskopschiene 100 von Fig. 6 in der ausgefahrenen Position. Bei einem Bewegen von der zusammengefahrenen Position in die ausgefahrene Position der Teleskopschiene 100 ist vorzugsweise eine der Führungsschienen 110, 130 fest angeordnet und die Zwischenschiene 120 sowie die entsprechend andere der Führungsschienen 130, 110 können in axialer Richtung verschoben bzw. verfahren werden.

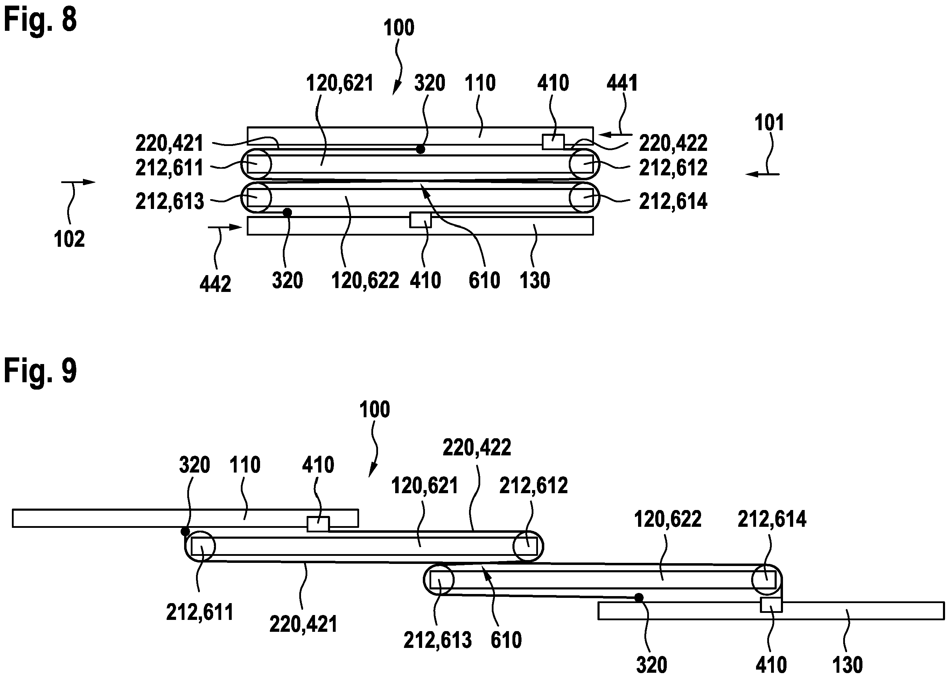

Fig. 8 zeigt die Teleskopschiene 100 von Fig. 1 mit der ersten und zweiten Führungsschiene 110, 130 sowie der Zwischenschiene 120. Im Gegensatz zu Fig. 1 weist die Zwischenschiene 120 nun jedoch zwei Schienenelemente 621, 622 auf, bzw. es sind zwei Zwischenschienen 621, 622 zur Ausbildung der Zwischenschiene 120 vorgesehen.

Analog zur Teleskopschiene 100 von Fig. 6 und Fig. 7 ist das Verbindungselement 422 über ein Befestigungselement 320 bevorzugt mittig an der ersten Führungsschiene 110 angeordnet. Das Verbindungselement 421 wird dabei vorzugsweise über ein dem zweiten Ende 102 der Teleskopschiene 100 zugewandtes Ende der Zwischenschiene 621 über eine Rolle 611 zu einem dem ersten Ende 101 der Teleskopschiene 100 zugewandten Ende der Zwischenschiene 622 umgeleitet bzw. an der Rolle 614 zur zweiten Führungsschiene 130 geführt. Das Verbindungselement 421 ist dabei bevorzugt an der zweiten Führungsschiene 130 über die Befestigungseinheit 410 befestigt.

Des Weiteren ist das Verbindungselement 422 bevorzugt an der ersten Führungsschiene 110 über die Befestigungseinheit 410 fixiert. Das Verbindungselement 422 wird vorzugsweise über eine Rolle 612, die an einem dem ersten Ende 101 der Teleskopschiene 100 zugewandten Ende der Zwischenschiene 621 angeordnet ist, sowie über eine Rolle 613, die an einem dem zweiten Ende 102 der Teleskopschiene 100 zugewandten Ende der Zwischenschiene 622 angeordnet ist, zur zweiten Führungsschiene 130 geleitet. An der zweiten Führungsschiene 130 ist wiederrum das Verbindungselement 320 fixiert.

Es wird darauf hingewiesen, dass in Fig. 8 zeichnerisch der Eindruck entsteht, dass sich die Verbindungselemente 421, 422 an einer Stelle 610 zwischen den Zwischenschienen 621, 622 kreuzen. Dies ist jedoch nichtzutreffend und wird in Fig. 10 näher beschrieben, wobei klargestellt wird, dass sich die Verbindungselemente 421, 422 nicht an der Stelle 610 kreuzen.

Fig. 9 zeigt die Teleskopschiene 100 von Fig. 8 in der ausgefahrenen Position. Analog zu Fig. 7 wird auch hier eine der Führungsschienen 110, 130 fest angeordnet, wobei sich bei einem Verfahren in die ausgefahrene Position die zwei Zwischenschienen 621, 622 sowie die entsprechend andere der Führungsschienen 130, 110 verschieben bzw. verfahren lassen. Die Teleskopschiene 100 von Fig. 9 kann wiederrum eine beliebige Anzahl von Zwischenschienen 120 aufweisen, wie beispielhaft in Fig. 8 beschrieben, wobei die Zwischenschienen 120 jeweils zwei Rollen 212 aufweisen.

Fig. 10 zeigt die Stelle 610 von Fig. 8. Bevorzugt wird an dieser Stelle 610 durch eine außermittige Anordnung der Rollen 611, 612 an der Zwischenschiene 621, sowie analog hierzu der Rollen 613, 614 von Fig. 8 an der Zwischenschiene 622 von Fig. 8, eine Kreuzung der Verbindungselemente 421, 422 vermieden.

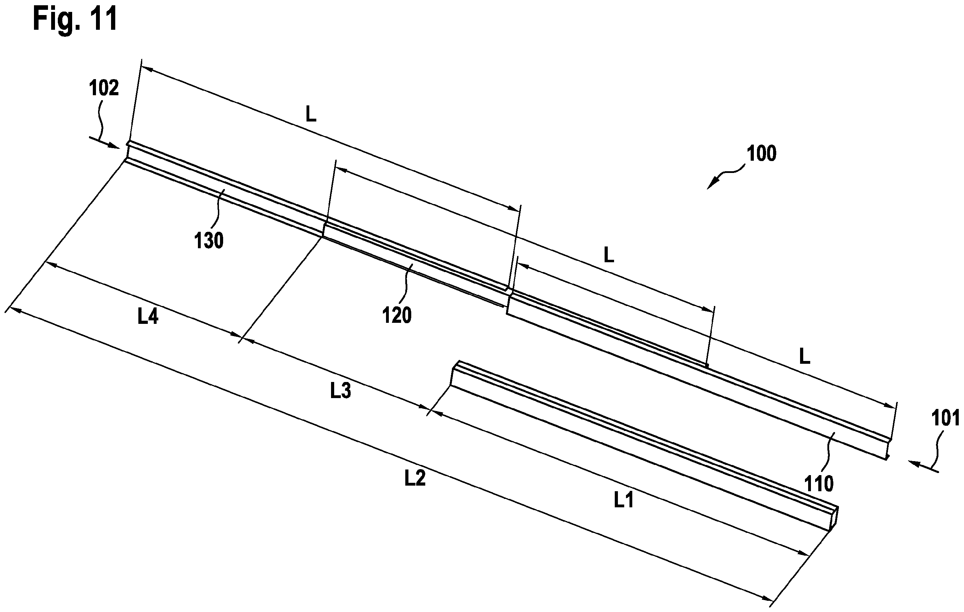

Fig. 11 zeigt die Teleskopschiene 100 von Fig. 1 in der zusammengefahrenen Position sowie in der ausgefahrenen Position. Bevorzugt weisen die erste und zweite Führungsschiene 110, 130 sowie die Zwischenschiene 120 jeweils eine Länge L auf, die einer ersten Länge L1 der Teleskopschiene 100 in der zusammengefahrenen Position entspricht.

Die Teleskopschiene 100 weist vorzugsweise in der ausgefahrenen Position eine zweite Länge L2 auf, die zumindest annähernd der doppelten ersten Länge L1 entspricht. Bevorzugt entspricht ein relativer Verfahrweg L3 zwischen der ersten Führungsschiene 110 und der Zwischenschiene 120 sowie ein relativer Verfahrweg L4 zwischen der zweiten Führungsschiene 130 und der Zwischenschiene 120 zum Verfahren der Teleskopschiene 100 von der zusammengefahrenen Position in die ausgefahrene Position, oder umgekehrt, jeweils zumindest annähernd der Hälfte der ersten Länge L1.

Somit kann bei halbem relativem Auszugsweg der Zwischenschiene 120 über die Länge L3 und der zweiten Führungsschiene 130 über die Länge L4 ein komplettes Ausziehen der Teleskopschiene 100 bei einem Vollauszug auf die Länge L2 erfolgen. Dabei wird lediglich eine Längenänderung der Länge L1 auf die Länge L1 plus L3 plus L4 benötigt.

Fig. 12 zeigt die Teleskopschiene 100 mit der Zwischenschiene 120 und den zwei Führungsschienen 110, 130 von Fig. 11. Die Zwischenschiene 120 weist dabei vorzugsweise einen Doppel-T-förmigen Grundkörper 720 auf. Die Zwischenschiene 120 weist, wie oben bei Fig. 2 beschrieben, die erste Laufbahn 235 auf der oberen Seite 201 und der unteren Seite 202 auf, wobei die erste Laufbahn 235 bzw. 726, 727 exemplarisch im Bereich des jeweils rechten Endes der oberen und unteren Seite 201, 202 angeordnet ist. Dabei ist, wie oben beschrieben, die zweite Laufbahn 236 vorzugsweise parallel zur ersten Laufbahn 235 angeordnet, wobei die zweite Laufbahn 236 bzw. 728, 729 illustrativ an einem linken Ende der Zwischenschiene 120 angeordnet ist. Hierbei ist die erste Laufbahn 235 zum Führen der ersten Führungsschiene 110 ausgebildet und die zweite Laufbahn 236 ist zum Führen der zweiten Führungsschiene 130 ausgebildet.

Illustrativ ist die Führungsschiene 110 rechts am Doppel-T-förmigen Grundkörper 720 angeordnet und die Führungsschiene 130 ist illustrativ links angeordnet. In Fig. 12 weisen die Führungsschienen 110, 130 beispielhaft einen annähernd C-förmigen Grundkörper 710, 730 auf. Dabei weisen die Grundkörper 710, 730 eine der Zwischenschiene 120 zugewandte Innenseite 743, 753 auf. Des Weiteren weisen die Grundkörper 710, 730 ein von der Zwischenschiene 120 weg gerichtetes, illustrativ oberes Ende 741, 751 und ein unteres Ende 742, 752 auf. Bevorzugt ist an der Innenseite 743, 753 im Bereich des oberen und unteren Endes 741, 751, 742, 752 die Laufbahn 295 angeordnet. Die erste Führungsschiene 110 weist vorzugsweise eine dritte Laufbahn 715, 716 auf, die der ersten Laufbahn 235 bzw. 726, 727 der Zwischenschiene 120 zugewandt angeordnet ist. Des Weiteren weist die zweite Führungsschiene 130 bevorzugt eine vierte Laufbahn 735, 736 auf, die der zweiten Laufbahn 236 bzw. 728, 729 der Zwischenschiene 120 zugewandt angeordnet ist. Illustrativ und vorzugsweise sind die ersten Laufbahnen 726, 727 der Zwischenschiene 120 rechts angeordnet und die zweiten Laufbahnen 728, 729 der Zwischenschiene 120 sind links angeordnet.

Die Laufbahnen 235, 236 bzw. 726, 727, 728, 729 der Zwischenschiene 120 sind dabei illustrativ den Führungsschienen 110, 130 bzw. dritten Laufbahnen 715, 716 und/oder den vierten Laufbahnen 735, 736 der Führungsschienen 110, 130 zugewandt angeordnet. Dabei ist bevorzugt die Laufbahn 726 der Zwischenschiene 120 der Laufbahn 715 der ersten Führungsschiene 110 zugewandt angeordnet und die Laufbahn 727 der Zwischenschiene 120 ist der Laufbahn 716 der ersten Führungsschiene 110 zugewandt angeordnet. Des Weiteren ist vorzugsweise die Laufbahn 728 der Zwischenschiene 120 der Laufbahn 735 der zweiten Führungsschiene 130 zugewandt angeordnet und die Laufbahn 729 der Zwischenschiene 120 ist der Laufbahn 736 der zweiten Führungsschiene 130 zugewandt angeordnet.

Der Grundkörper 710 der ersten Führungsschiene 110, der Grundkörper 730 der zweiten Führungsschiene 130 und/oder der Grundkörper 720 der Zwischenschiene 120 weisen vorzugsweise mindestens ein Laufbahnelement 712, 713, 732, 733, 722, 723, 724, 725 zur Ausbildung der ersten, zweiten, dritten oder vierten Laufbahn 726, 727, 728, 729, 715, 716, 735, 736 auf. Dabei ist das mindestens eine Laufbahnelement 722, 723, 724, 725 dem Grundkörper 720 der Zwischenschiene 120 zugeordnet. Des Weiteren sind vorzugsweise Laufbahnelemente 712, 713 dem Grundkörper 710 der ersten Führungsschiene 110 zugeordnet und die Laufbahnelemente 732, 733 sind dem Grundkörper 730 der zweiten Führungsschiene 130 zugeordnet. Dabei bildet das Laufbahnelement 722 der Zwischenschiene 120 die Laufbahn 726 aus, das Laufbahnelement 723 die Laufbahn 727, das Laufbahnelement 724 die Laufbahn 728 und das Laufbahnelement 725 die Laufbahn 729. Darüber hinaus bildet das Laufbahnelement 712 die Laufbahn 715 und das Laufbahnelement 713 die Laufbahn 716 der ersten Führungsschiene 110 aus. Des Weiteren bildet das Laufbahnelement 732 die Laufbahn 735 und das Laufbahnelement 733 die Laufbahn 736 der zweiten Führungsschiene 130 aus.

Vorzugsweise sind zwischen der Laufbahn 715 der ersten Führungsschiene 110 und der Laufbahn 726 der Zwischenschiene 120 Wälzkörper 772 angeordnet und zwischen der Laufbahn 716 der ersten Führungsschiene 110 und der Laufbahn 727 der Zwischenschiene 120 sind Wälzkörper 774 angeordnet. Dabei sind die Wälzkörper 772, 774 der Mehrzahl 119 von Wälzkörpern 118 von Fig. 1 zugeordnet. Darüber hinaus sind bevorzugt zwischen der Laufbahn 735 der zweiten Führungsschiene 130 und der Laufbahn 728 der Zwischenschiene 120 Wälzkörper 776 angeordnet und zwischen der Laufbahn 736 der zweiten Führungsschiene 130 und der Laufbahn 729 der Zwischenschiene 120 sind vorzugsweise Wälzkörper 778 angeordnet. Dabei sind die Wälzkörper 776, 778 der Mehrzahl 139 von Wälzkörpern 138 von Fig. 1 zugeordnet.

Gemäß einer Ausführungsform weist der Grundkörper 710, 720, 730 ein erstes Material auf und das mindestens eine Laufbahnelement 712, 713, 732, 733, 722, 723, 724, 725 weist zumindest abschnittsweise ein zweites Material auf. Vorzugsweise ist das erste Material Aluminium und/oder das zweite Material ist Stahl. Hierbei weist das mindestens eine Laufbahnelement 712, 713, 732, 733, 722, 723, 724, 725 bevorzugt Vollmaterial auf. Das mindestens eine Laufbahnelement 712, 713, 732, 733, 722, 723, 724, 725 ist dabei vorzugsweise durch Kaltziehen und/oder Fräsen ausgebildet.

Bevorzugt ist die erste, zweite dritte und/oder vierte Laufbahn 726, 727, 728, 729, 715, 716, 735, 736 derart ausgebildet, dass zwischen dem Wälzkörper 118, 138 und der Laufbahn 726, 727, 728, 729, 715, 716, 735, 736 zumindest ein 2-Punkt-Kontakt, bevorzugt ein 3-Punkt-Kontakt, besteht. Vorzugsweise wird ein 3-Punkt-Kontakt oder ein 4-Punkt-Kontakt der Wälzkörper 118, 138 mit der jeweiligen Laufbahn 726, 727, 728, 729, 715, 716, 735, 736 ausgebildet.

Fig. 13 zeigt die Teleskopschiene 100 mit der Zwischenschiene 120 und den zwei Führungsschienen 110, 130 von Fig. 12. Die Zwischenschiene 120 weist dabei vorzugsweise den Doppel-T-förmigen Grundkörper 720 von Fig. 12 auf.

Illustrativ ist die Führungsschiene 110 rechts am Doppel-T-förmigen Grundkörper 720 angeordnet und die Führungsschiene 130 ist illustrativ links angeordnet. In Fig. 13 weisen die Führungsschienen 110, 130 beispielhaft einen U-förmigen Grundkörper 810, 830 auf. Dabei weisen die Grundkörper 810, 830 eine der Zwischenschiene 120 zugewandte Innenseite 843, 853 auf. Des Weiteren weisen die Grundkörper 810, 830 ein von der Zwischenschiene 120 weg gerichtetes illustrativ oberes Ende 841, 851 und ein unteres Ende 842, 852 auf.

Die erste Führungsschiene 110 weist vorzugsweise die dritte Laufbahn 715, 716 auf, die der ersten Laufbahn 726, 727 der Zwischenschiene 120 zugewandt angeordnet ist. Des Weiteren weist die zweite Führungsschiene 130 bevorzugt die vierte Laufbahn 735, 736 auf, die der zweiten Laufbahn 728, 729 der Zwischenschiene 120 zugewandt angeordnet ist.

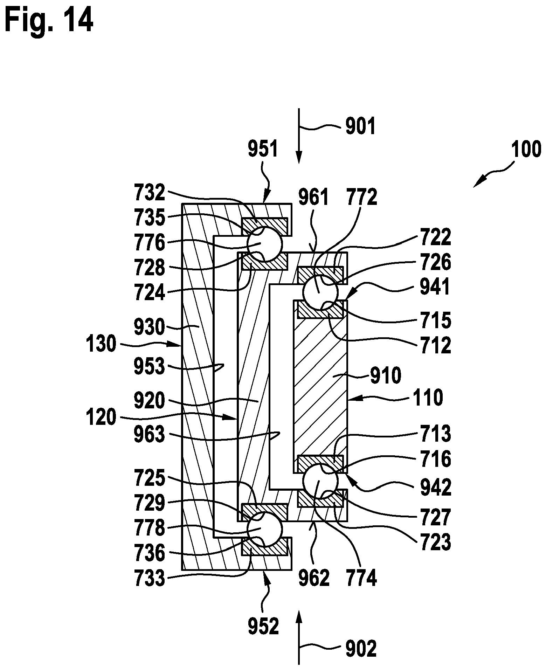

Fig. 14 zeigt die Teleskopschiene 100 von Fig. 13, die ein illustrativ oberes Ende 901 und ein illustrativ unteres Ende 902 aufweist. Vorzugsweise weist die Teleskopschiene 100 die Zwischenschiene 120 und die Führungsschienen 110, 130 von Fig. 13 auf. Die Zwischenschiene 120 weist dabei vorzugsweise einen U-förmigen Grundkörper 920 auf. An ihrer dem illustrativ oberen Ende 901 zugewandten Außenseite 961 weist die Zwischenschiene 120 das Laufbahnelement 724 zur Ausbildung der Laufbahn 728 auf und auf ihrer dem unteren Ende 902 zugewandten Außenseite 962 weist die Zwischenschiene 120 das Laufbahnelement 725 zur Ausbildung der Laufbahn 729 auf. Des Weiteren weist der Grundkörper 920 eine der ersten Führungsschiene 110 zugewandt angeordnete Innenseite 963 auf. Bevorzugt ist die Innenseite 963 derart ausgebildet, dass die erste Führungsschiene 110 zumindest abschnittsweise an der Innenseite 963 angeordnet werden kann. Hierfür ist an einem dem oberen Ende 901 zugewandten Bereich der Innenseite 963 das Laufbahnelement 722 angeordnet und an einem dem unteren Bereich 902 zugewandten Bereich der Innenseite 963 ist das Laufbahnelement 723 angeordnet.

Illustrativ ist die erste Führungsschiene 110 innerhalb des U-förmigen Grundkörpers 920 angeordnet. Die erste Führungsschiene 110 weist dabei beispielhaft einen rechteckigen Grundkörper 910 auf. Der Grundkörper 910 weist einen dem oberen Ende 901 zugewandten Bereich 941 und einen dem unteren Ende 902 zugewandten Bereich 942 auf. Bevorzugt ist dem Bereich 941 das Laufbahnelement 712 zugeordnet. Hierbei ist das Laufbahnelement 712 derart angeordnet, dass die Laufbahn 715 der Laufbahn 726 der Zwischenschiene 120 zugewandt angeordnet ist. Darüber hinaus ist das Laufbahnelement 713 dem Bereich 942 zugeordnet. Dabei ist das Laufbahnelement 713 derart angeordnet, dass die Laufbahn 716 der Laufbahn 727 der Zwischenschiene 120 zugewandt angeordnet ist.

Darüber hinaus weist die zweite Führungsschiene 130 beispielhaft einen U-förmigen Grundkörper 930 auf. Dabei weist der Grundkörper 930 eine der Zwischenschiene 120 zugewandte Innenseite 953 auf. Illustrativ und vorzugsweise ist die Zwischenschiene 120 zumindest abschnittsweise im Bereich der Innenseite 953 bzw. innerhalb der zweiten Führungsschiene 130 angeordnet. Bevorzugt weist der Grundkörper 930 einen dem oberen Ende 901 zugewandten Bereich 951 und einen dem unteren Ende 903 zugewandten Bereich 952 auf. Hierbei ist das Laufbahnelement 732 dem Bereich 951 zugeordnet und das Laufbahnelement 733 ist dem Bereich 953 zugeordnet. Dabei ist das Laufbahnelement 732 derart angeordnet, dass die Laufbahn 735 der Laufbahn 728 der Zwischenschiene 120 zugewandt angeordnet ist. Darüber hinaus ist das Laufbahnelement 733 derart angeordnet, dass die Laufbahn 736 der Laufbahn 729 der Zwischenschiene 120 zugewandt angeordnet ist.

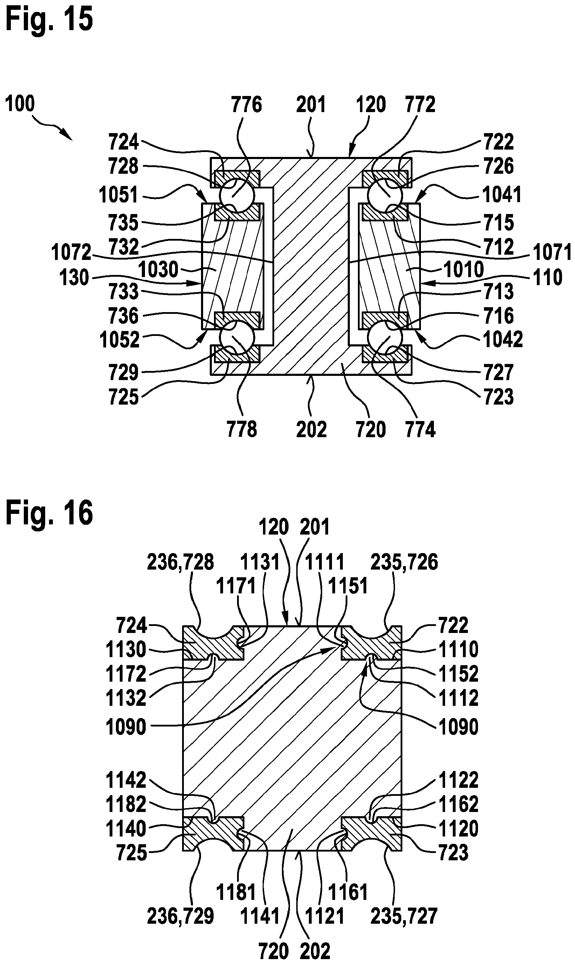

Fig. 15 zeigt die Zwischenschiene 120 mit dem Doppel-T-förmigen Grundkörper 720 von Fig. 12 und der ersten und zweiten Führungsschiene 110, 130. Der Grundkörper 720 weist bevorzugt eine illustrativ rechte Aufnahme 1071 und eine linke Aufnahme 1072 auf. Dabei ist jeweils eine Führungsschiene 110, 130 zumindest abschnittsweise in einer zugeordneten Aufnahme 1071, 1072 angeordnet. Hierfür weisen die Führungsschiene 110, 130 vorzugsweise einen rechteckigen Grundkörper 1010, 1030 auf. Vorzugsweise ist die erste Führungsschiene 110 der Aufnahme 1071 zugeordnet und die zweite Führungsschiene 130 ist der Aufnahme 1072 zugeordnet.

Des Weiteren sind im Bereich der Aufnahmen 1071, 1072 vorzugsweise die ersten und zweiten Laufbahnen 726, 727, 728, 729 der Zwischenschiene 120 angeordnet. Hierbei sind die Laufbahnen 726, 727 in der Aufnahme 1071 angeordnet und die Laufbahnen 728, 729 sind in der Aufnahme 1072 angeordnet. Dabei sind bevorzugt die Laufbahnen 726 und 728 in der jeweiligen Aufnahme 1071, 1072 dem oberen Ende 201 zugewandt angeordnet und die Laufbahnen 727 und 729 sind in der jeweiligen Aufnahme 1071, 1072 dem unteren Ende 202 zugewandt angeordnet.

Die Grundkörper 1010, 1030 der jeweiligen Führungsschiene 110, 130 weisen einen dem oberen Ende 201 zugewandten Bereich 1041, 1051 und einen dem unteren Ende 202 zugewandten Bereich 1042, 1052 auf. Bevorzugt ist dem Bereich 1041 das Laufbahnelement 712 zugeordnet. Hierbei ist das Laufbahnelement 712 derart angeordnet, dass die Laufbahn 715 der Laufbahn 726 der Zwischenschiene 120 zugewandt angeordnet ist. Darüber hinaus ist das Laufbahnelement 713 dem Bereich 1042 zugeordnet. Dabei ist das Laufbahnelement 713 derart angeordnet, dass die Laufbahn 716 der Laufbahn 727 der Zwischenschiene 120 zugewandt angeordnet ist. Analog dazu ist bevorzugt dem Bereich 1051 das Laufbahnelement 732 zugeordnet. Hierbei ist das Laufbahnelement 732 derart angeordnet, dass die Laufbahn 735 der Laufbahn 728 der Zwischenschiene 120 zugewandt angeordnet ist. Darüber hinaus ist das Laufbahnelement 733 dem Bereich 1052 zugeordnet. Dabei ist das Laufbahnelement 733 derart angeordnet, dass die Laufbahn 736 der Laufbahn 729 der Zwischenschiene 120 zugewandt angeordnet ist.

Fig. 16 zeigt die Zwischenschiene 120 von Fig. 15 mit ihren vorzugsweise vier Laufbahnelementen 722-725 zur Ausbildung der Laufbahnen 726-729. Dabei verdeutlicht Fig. 16 die Anbindung der Laufbahnelemente 722-725 an den Grundkörper 720 der Zwischenschiene 120. Zur Anordnung der Laufbahnelemente 722-725 am Grundkörper 720 weist der Grundkörper 720 Aufnahmen 1110, 1120, 1130, 1140 auf. Dabei ist vorzugsweise das Laufbahnelement 722 in der Aufnahme 1110 angeordnet, das Laufbahnelement 723 ist in der Aufnahme 1120 angeordnet, das Laufbahnelement 724 ist in der Aufnahme 1130 angeordnet und das Laufbahnelement 725 ist in der Aufnahme 1140 angeordnet.

Bevorzugt sind die Laufbahnelemente 722, 723, 724, 725 in der jeweils zugeordneten Aufnahme 1110-1140 über eine Nut-Feder-Verbindung 1090 am Grundkörper 720 befestigt. Zur Ausbildung der Nut-Feder-Verbindung 1090 weist der Grundkörper 720, vorzugsweise die Aufnahmen 1110-1140, Stege 1111, 1112, 1121, 1122, 1131, 1132, 1141, 1142 auf und die Laufbahnelemente 722-725 weisen den Stegen 1111, 1112, 1121, 1122, 1131, 1132, 1141, 1142 zugeordnete Nuten 1151, 1152, 1161, 1162, 1171, 1172, 1181, 1182 auf. Bevorzugt ist eine Nut 1151, 1161, 1171, 1181 der Laufbahn 726, 727, 728, 729 gegenüberliegend angeordnet und eine Nut 1152, 1162, 1172, 1182 ist an einer dem Grundkörper 720 zugewandten Seitenfläche des Laufbahnelements 722-725 angeordnet. Illustrativ sind die Nuten 1151, 1152 dem Laufbahnelement 722 zugeordnet, die Nuten 1161, 1162 dem Laufbahnelement 723, die Nuten 1171, 1172 dem Laufbahnelement 724 und die Nuten 1181, 1182 dem Laufbahnelement 725. Dabei sind beispielhaft die Stege 1111, 1112 den Nuten 1151, 1152 des Laufbahnelements 722 zugeordnet, die Stege 1121, 1122 den Nuten 1161, 1162 des Laufbahnelements 723, die Stege 1113, 1132 den Nuten 1171, 1172 des Laufbahnelements 724 und die Stege 1141, 1142 den Nuten 1181, 1182 des Laufbahnelements 725.

Es wird darauf hingewiesen, dass die Ausgestaltung der Laufbahnelemente 722-725 lediglich beispielhaften Charakter hat und nicht als Einschränkung der Erfindung zu sehen ist. So können die Laufbahnelemente 722-725 eine beliebig andere Form aufweisen, z.B. ein Vieleck. Des Weiteren können die Nuten an einer beliebig anderen Stelle des Laufbahnelements 722-725 angeordnet sein. Darüber hinaus können die Laufbahnelemente 722-725 auch die Stege aufweisen und die Zwischenschiene 120 kann mit Nuten versehen sein. Bevorzugt sind die Stege und Nuten entlang einer gesamten Länge des Grundkörpers und/oder der Laufbahnelemente ausgebildet sind. Jedoch können die Stege und Nuten auch nur abschnittsweise ausgebildet sein.

Vorzugsweise sind die Laufbahnelemente 722-725 der Zwischenschiene 120 über die Nut-Feder-Verbindung 1090 am zugeordneten Grundkörper 720 angeordnet. Des Weiteren sind die Laufbahnelemente 712, 713, 732, 733 der Führungsschienen 110, 130 über die Nut-Feder-Verbindung am zugeordneten Grundkörper 710, 730. 810, 830. 910, 930. 1010, 1030 der vorangegangenen Figuren befestigt.

Fig. 17 zeigt einen Abschnitt des Laufbahnelements 722 der Zwischenschiene 120 von Fig. 16, wobei das Laufbahnelement 722 stellvertretend für die Laufbahnelemente 722-725 der Zwischenschiene 120 sowie die Laufbahnelemente712, 713, 732, 733 der Führungsschienen 110, 130 beschrieben wird. Das Laufbahnelement 722 weist vorzugsweise einen zylindrischen Grundkörper mit einer illustrativ dargestellten Oberseite 1201, einer Unterseite 1202, einer illustrativ linken Seitenfläche 1203 und einer illustrativ rechten Seitenfläche 1204 auf. Dabei weist eine Seite, illustrativ die Unterseite 1202, die Laufbahn 726 zum Führen der Wälzkörper 118, 138 von Fig. 1 auf. Des Weiteren weisen zwei Seiten, illustrativ die Oberseite 1201 und die linke Seitenfläche 1203, jeweils die Nut 1152, 1151 zur Anordnung der Stege 1112, 1111 auf.

Darüber hinaus weist das Laufbahnelement 722 eine Dicke D auf. Bevorzugt ist die Dicke D des Laufbahnelements 722 größer als eine maximale Eindringtiefe H einer Hertzschen Pressung. Hierbei ist die maximale Eindringtiefe H einer Hertzschen Pressung die Tiefe der maximalen orthogonalen Schubspannung, die sich aus der Hertzschen Pressung ergibt.

Fig. 18 zeigt einen beispielhaften Wälzkörperkäfig 1310 zur Anordnung der Wälzkörper 118, 138 von Fig. 1 bzw. den Wälzkörpern 772, 774, 776, 778 von Fig. 12 bis Fig. 15. Der Wälzkörperkäfig 1310 weist beispielhaft einen U-förmigen Grundkörper 1311 auf. Der U-förmige Grundkörper 1311 weist dabei vorzugsweise einen illustrativ linken Haltebereich 1313 sowie einen illustrativ rechten Haltebereich 1314 auf, die bevorzugt über einen Verbindungsbereich 1315 miteinander verbunden sind. Bevorzugt weisen die Haltebereiche 1313 in Längsrichtung 1302 eine Mehrzahl 1320 von Aufnahmen 1321, 1322, 1323 zur Anordnung der Wälzkörper 118 bzw. 772, 774 auf. Illustrativ und repräsentativ sind in Fig. 18 die Wälzkörper 118 bzw. 772, 774 in den Aufnahmen 1321-1323 des Wälzkörperkäfigs 1310 angeordnet. Vorzugsweise sind die erste und zweite Mehrzahl 119, 139 von Wälzkörpern 118, 138 jeweils in einem derartigen Wälzkörperkäfig 1310 angeordnet.

Bevorzugt sind die Wälzkörper 118, 138 bzw. 772, 774, 776, 778, die einer Führungsschiene 110, 130 zugeordnet sind, in zumindest einem Wälzkörperkäfig 1310 angeordnet. Jedoch können auch mehrere Wälzkörperkäfige 1310 einer Führungsschiene 110, 130 zugeordnet sein. Dabei können die Wälzkörperkäfige 1310 miteinander verbunden sein oder unabhängig voneinander an der Führungsschiene 110, 130 angeordnet sein. Darüber hinaus kann der mindestens eine Wälzkörperkäfig 1310 auch eine beliebig andere Form aufweisen, z.B. C-förmig sein. Des Weiteren kann ein Wälzkörperkäfig 1310 auch lediglich aus einem Haltebereich 1313, 1314 bestehen.

## Patentansprüche

1. Teleskopschiene (100) mit einer ersten und einer zweiten Führungsschiene (110, 130) und mit einer Zwischenschiene (120), wobei die erste Führungsschiene (110) an einer ersten Laufbahn (235; 726, 727) der Zwischenschiene (120) geführt ist und die zweite Führungsschiene (130) an einer zweiten, zur ersten Laufbahn (235) parallel verlaufenden Laufbahn (236; 728, 729) der Zwischenschiene (120) geführt ist, wobei die erste Führungsschiene (110) eine dritte Laufbahn (715, 716) aufweist, die der ersten Laufbahn (235; 726, 727) der Zwischenschiene (120) zugewandt angeordnet ist, wobei die zweite Führungsschiene (130) eine vierte Laufbahn (735, 736) aufweist, die der zweiten Laufbahn (236; 728, 729) der Zwischenschiene (120) zugewandt angeordnet ist, und wobei die erste und zweite Führungsschiene (110, 130) jeweils über Wälzkörper (118, 138) an der Zwischenschiene (120) geführt sind, **dadurch gekennzeichnet, dass** zumindest eine der ersten Führungsschiene (110), der zweiten Führungsschiene (130) oder der Zwischenschiene (120) einen zugeordneten Grundkörper (710, 730, 720) aufweist, wobei an dem zugeordneten Grundkörper (710, 730, 720) mindestens ein Laufbahnelement (712, 713, 732, 733, 722, 723, 724, 725) zur Ausbildung einer der ersten, zweiten, dritten oder vierten Laufbahn (726, 727, 728, 729, 715, 716, 735, 736) befestigt ist, und wobei der Grundkörper (710, 730, 720) ein erstes Material aufweist und das Laufbahnelement (712, 713, 732, 733, 722, 723, 724, 725) zumindest abschnittsweise ein zweites Material aufweist.

2. Teleskopschiene nach Anspruch 1, **dadurch gekennzeichnet, dass** das Laufbahnelement (712, 713, 732, 733, 722, 723, 724, 725) über eine Nut-Feder-Verbindung (1090) am Grundkörper (710, 730, 720) befestigt ist.

3. Teleskopschiene nach Anspruch 1 oder 2, **dadurch gekennzeichnet, dass** das erste Material Aluminium ist und das zweite Material Stahl ist.

4. Teleskopschiene nach einem der vorhergehenden Ansprüche, **dadurch gekennzeichnet, dass** das Laufbahnelement (712, 713, 732, 733, 722, 723, 724, 725) Vollmaterial aufweist und durch Kaltziehen und/oder Fräsen ausgebildet ist.

5. Teleskopschiene nach einem der vorhergehenden Ansprüche, **dadurch gekennzeichnet, dass** die erste, zweite, dritte und/oder vierte Laufbahn (726, 727, 728, 729, 715, 716, 735, 736) derart ausgebildet ist, dass zwischen dem Wälzkörper (118, 138) und der Laufbahn (726, 727, 728, 729, 715, 716, 735, 736) zumindest ein 2-Punkt-Kontakt, bevorzugt ein 3-Punkt-Kontakt besteht.

6. Teleskopschiene nach einem der vorhergehenden Ansprüche, **dadurch gekennzeichnet, dass** eine Dicke (D) des Laufbahnelements (712, 713, 732, 733, 722, 723, 724, 725) größer als eine maximale Eindringtiefe (H) einer Hertzschen Pressung ist.

7. Teleskopschiene nach einem der vorhergehenden Ansprüche, **dadurch gekennzeichnet, dass** die erste Führungsschiene (110) über eine erste Mehrzahl (119) von Wälzkörpern (118) an der Zwischenschiene (120) geführt ist und die zweite Führungsschiene (130) über eine zweite Mehrzahl (139) von Wälzkörpern (138) an der Zwischenschiene (120) geführt ist.

8. Teleskopschiene nach Anspruch 7, **dadurch gekennzeichnet, dass** die erste und zweite Mehrzahl (119, 139) von Wälzkörpern (118, 138) jeweils in einem Wälzkörperkäfig (1310) angeordnet sind.

9. Teleskopschiene nach einem der vorhergehenden Ansprüche, **dadurch gekennzeichnet, dass** die erste und/oder zweite Führungsschiene (110, 130) an der Zwischenschiene (120) zwangsgeführt sind, wobei die erste und zweite Führungsschiene (110, 130) sowie die Zwischenschiene (120) über mindestens zwei längliche Verbindungselemente (220; 421, 422) bei einem Bewegen von einer zusammengefahrenen Position in eine ausgefahrene Position, oder umgekehrt, synchronisiert sind.

10. Teleskopschiene nach Anspruch 9, **dadurch gekennzeichnet, dass** die Verbindungselemente (421, 422) an der jeweiligen Führungsschiene (110, 130) jeweils über zugeordnete Befestigungselemente (320, 410) fixiert sind, wobei die zugeordneten Befestigungselemente (320, 410) als Verfahrwegsbegrenzung der ersten und zweiten Führungsschiene (110, 130) an der Zwischenschiene (120) in der ausgefahrenen Position ausgebildet sind.

11. Teleskopschiene nach Anspruch 9 oder 10, **dadurch gekennzeichnet, dass** den Verbindungselementen (421, 422) jeweils eine Spannvorrichtung (395) zum manuellen Spannen des jeweiligen Verbindungselements (220) zugeordnet ist.

12. Teleskopschiene nach einem der Ansprüche 9 bis 11, **dadurch gekennzeichnet, dass** die Verbindungselemente (220) nach Art eines Seils, eines Riemens und/oder einer Kette ausgebildet sind und dazu ausgebildet sind, Druckkräfte und/oder Zugkräfte aufzunehmen.

13. Teleskopschiene nach einem der Ansprüche 9 bis 12, **dadurch gekennzeichnet, dass** die Zwischenschiene (120) an jedem ihrer Enden (441, 442) zumindest eine Rolle (212) zum Umlenken des jeweiligen Verbindungselements (220) aufweist.

14. Teleskopschiene nach einem der vorhergehenden Ansprüche, **dadurch gekennzeichnet, dass** die erste und zweite Führungsschiene (110, 130) sowie die Zwischenschiene (120) jeweils eine Länge (L) aufweisen, die einer ersten Länge (L1) der Teleskopschiene (100) in der zusammengefahrenen Position entspricht, wobei die Teleskopschiene (100) in der ausgefahrenen Position eine zweite Länge (L2) aufweist, die zumindest annähernd der doppelten ersten Länge (L1) entspricht, und wobei ein relativer Verfahrweg zwischen der ersten Führungsschiene (110) und der Zwischenschiene (120) sowie der zweiten Führungsschiene (130) und der Zwischenschiene (120) zum Bewegen der Teleskopschiene (100) von der zusammengefahrenen Position in die ausgefahrene Position, oder umgekehrt, jeweils zumindest annähernd der Hälfte der ersten Länge (L3) entspricht.

15. Teleskopschiene nach einem der vorhergehenden Ansprüche, **dadurch gekennzeichnet, dass** die Zwischenschiene (120) über eine direkte Anbindung mit einer translatorischen Bewegungseinheit (240) verbindbar ist.
